# FASCICULE DE BREVET EUROPEEN

(11) **EP 1 277 427 B1**
(45) Date de publication et mention de la délivrance du brevet: **28.09.2005**
(21) Numéro de dépôt: 02356145.9
(22) Date de dépôt: 22.07.2002
(51) Int. Cl.: A47J 27/09, A47J 27/08

(54) **Autocuiseur comportant une soupape d'evacuation d'air calibrée**
Dampfdruck-Kochtopf mit einem kalibrierten Entlüftungsventil
Steam pressure cooker with a calibrated air release valve

(30) Priorité: 20.07.2001 FR 0109898
(43) Date de publication de la demande: 22.01.2003
(73) Titulaire: SEB S.A., 69132 Ecully Cedex (FR)
(72) Inventeur: Chameroy, Eric, 21260 Veronnes (FR); Murat, Pascal Roland Clément, 21121 Fontaine les Dijon (FR)
(74) Mandataire: Martin, Didier Roland Valéry

(56) Documents cités:
- EP-A- 0 008 999
- EP-A- 0 596 163
- DE-A- 3 027 057
- DE-A- 3 143 480
- GB-A- 802 785
- US-A- 2 619 982
- US-A- 4 143 787

## Description

La présente invention se rapporte au domaine général des appareils de cuisson domestiques sous pression comprenant une cuve de cuisson et un couvercle destiné à être verrouillé sur la cuve pour permettre la montée en pression de l'appareil et la cuisson sous pression des aliments contenus dans la cuve.

La présente invention concerne un appareil de cuisson domestique sous pression comprenant une cuve de cuisson et un couvercle destiné à être verrouillé sur la cuve pour permettre la montée en pression de l'appareil et la cuisson des aliments.

La présente invention concerne également un procédé de cuisson d'aliments sous pression de vapeur dans une enceinte fermée, dans laquelle on assure la montée en pression ou en température de l'enceinte contenant les aliments.

Il est déjà connu à ce jour de prévoir d'équiper les appareils de cuisson domestiques sous pression, du genre autocuiseurs, avec des systèmes de doigts ou clapets réagissant à la pression interne régnant dans l'appareil pour venir fermer, de manière étanche, l'appareil à partir ou au delà d'une pression déterminée.

En règle générale, ces systèmes de doigts ou de clapets sont montés dans le couvercle de l'appareil et sont mobiles dans un siège de soupape entre des positions basses et hautes de butée. Après avoir verrouillé le couvercle sur la cuve, les systèmes de doigts ou de clapets passent progressivement de leur position basse de butée vers leur position haute, sous l'influence de l'échauffement du milieu gazeux présent dans la cuve en début de cuisson.

Les systèmes connus à ce jour réagissent donc à la montée progressive en pression, et permettent de laisser échapper une petite quantité d'un mélange air / vapeur jusqu'à ce que le doigt ou le clapet atteigne sa position haute de butée.

De tels systèmes permettent un fonctionnement acceptable d'un autocuiseur, mais souffrent d'un inconvénient lié à la persistance de la présence d'air dans le milieu gazeux de cuisson. En effet, il s'avère que l'atteinte de la position haute de butée du doigt ou du clapet s'effectue à une valeur de température ou de pression mal maîtrisée et imprécise, et dans tous les cas à des valeurs de pression ou températures (70°C environ) faibles conduisant à une fermeture prématurée du doigt ou du clapet, de telle sorte que le milieu de cuisson contient toujours une part non négligeable d'air, préjudiciable à une cuisson optimale des aliments, et ce au cours d'une période de temps optimisée, en regard du respect de la relation Pression / Température.

Par ailleurs, il s'avère que dans les appareils de cuisson domestiques sous pression connus, les systèmes de doigt réagissant à la pression sont également associés à un dispositif de sécurité à l'ouverture ou à la mauvaise fermeture du couvercle destiné à n'assurer une montée en pression de l'autocuiseur, et donc du système de doigt ou de clapet, que si le couvercle est correctement positionné et verrouillé. On comprend dès lors que pour des raisons de sécurité, les systèmes de doigt ou de clapet sont conçus pour atteindre leur position haute de butée à des valeurs de pression relativement faibles, et dans tous les cas en général inférieures à 4 kPa (valeur communément admise pour la sécurité de l'utilisateur à l'ouverture). De tels dispositifs s'opposent à un échappement de l'air résultant du début de cuisson.

On connaît par ailleurs par le document DE-30 27 057 un autocuiseur équipé d'un clapet de fuite susceptible de prendre d'une part une position d'ouverture autorisant une purge de l'air de l'appareil ou d'autre part une position de fermeture correspondant à une absence de fuite d'air vers l'extérieur, ladite position d'ouverture étant maintenue jusqu'à l'atteinte d'une valeur prédéterminée de température.

On connaît également, par les documents GB-802 785, US-2,619,982, EP-596 163 et US-4,143,787 un autocuiseur équipé d'un clapet de fuite susceptible de prendre d'une part une position d'ouverture autorisant une purge de l'air de l'appareil ou d'autre part une position de fermeture correspondant à une absence de fuite d'air vers l'extérieur, ladite position d'ouverture étant maintenue jusqu'à l'atteinte d'une valeur prédéterminée de pression.

Les objets assignés à l'invention visent en conséquence à remédier aux différents inconvénients énumérés précédemment et à proposer un nouvel appareil et un nouveau procédé de cuisson domestique sous pression permettant d'assurer, de manière maîtrisée, une purge aussi complète que possible de l'appareil sous pression, sans pour autant perturber le bon déroulement de la phase de montée en pression ou montée en température, et notamment sans rallonger le temps de cuisson, ni perturber la qualité des aliments.

Un autre objet de l'invention vise à proposer un nouvel appareil de cuisson permettant à la fois une purge aussi efficace que possible de l'air avant la phase de cuisson proprement dite, tout en étant d'une sécurité maximale en permettant un verrouillage de l'appareil dès l'atteinte de valeurs de pressions faibles.

Un autre objet de l'invention vise à proposer un nouvel appareil de cuisson de conception particulièrement simple et efficace ne perturbant pas le fonctionnement des autres dispositifs, notamment de sécurité, de l'appareil.

Un autre objet de l'invention vise à proposer un nouvel appareil de cuisson dans lequel le système de purge soit aisément intégré.

Les objets assignés à l'invention sont atteints à l'aide d'un appareil de cuisson domestique sous pression conforme à l'objet de la revendication 1.

Les objets assignés à l'invention sont également atteints à l'aide d'un procédé de cuisson d'aliments sous pression de vapeur dans une enceinte fermée conforme à l'objet de la revendication 15.

D'autres objets et avantages de l'invention apparaîtront plus en détails à la lecture de la description qui suit, en référence aux dessins annexés donnés à titre d'exemples illustratifs et non limitatifs dans lesquels :
- La figure 1 illustre, selon une vue en coupe partielle, un premier exemple de réalisation d'un moyen de fuite calibré conforme à l'invention réagissant à la température.
- La figure 2 illustre, selon une vue en coupe partielle, un second exemple de réalisation d'un moyen de fuite calibré conforme à l'invention et réagissant à la pression.
- La figure 3 illustre, selon une vue en coupe partielle, un troisième exemple de réalisation d'un système conforme à l'invention réagissant à la température et intégré dans un dispositif de sécurité à la fermeture.
- La figure 4 illustre, selon une vue en coupe partielle, un quatrième exemple de réalisation d'un moyen de fuite calibré conforme à l'invention réagissant à la pression et intégré dans un dispositif de sécurité à la fermeture.
- La figure 5 illustre, selon une vue en coupe transversale partielle, un cinquième exemple de réalisation d'un moyen de fuite calibré conforme à l'invention réagissant à la pression.
- La figure 6 illustre, selon une vue en coupe transversale partielle, un sixième exemple de réalisation d'un moyen de fuite calibré conforme à l'invention réagissant à la température et intégré dans une rampe de soupape.
- La figure 7 illustre, selon une vue en coupe transversale partielle, un septième exemple de réalisation d'un moyen de fuite calibré conforme à l'invention correspondant à celui illustré à la figure 5, mais intégré dans un dispositif de sécurité à la fermeture.
- La figure 8 illustre, selon une vue en perspective et partiellement éclatée, un huitième exemple de réalisation d'un système de purge conforme à l'invention réagissant avec le temps.
- Les figures 9A et 9B illustrent, selon des vues en coupe transversale partielle, un autre exemple de réalisation d'un système de purge conforme à l'invention réagissant à la température.

Dans les exemples qui suivent, les systèmes de purge d'air ou moyens de fuite calibrés conformes à l'invention sont intégrés ou montés dans un appareil de cuisson domestique sous pression, du genre autocuiseur, comprenant de manière connue en soi une cuve de cuisson (non représentée aux figures) et un couvercle 2 destiné à être verrouillé ou rapporté sur la cuve par tous moyens appropriés, pour permettre la montée en pression de l'appareil, et la cuisson proprement dite des aliments. Les systèmes de purge d'air conformes à l'invention sont destinés à être intégrés et montés dans tout type d'autocuiseur, indépendamment du système de verrouillage du couvercle sur la cuve, qu'il s'agisse de systèmes de verrouillage faisant intervenir un étrier, des rampes de cuve et de couvercle, des mâchoires déplaçables radialement ou tout autre système. Les appareils de cuisson domestiques sous pression concernés par l'invention sont donc des autocuiseurs à étriers, des autocuiseurs à baïonnettes, des autocuiseurs à mâchoires radiales ou encore des autocuiseurs à trou d'homme, une telle liste n'étant bien évidemment donnée qu'à titre purement illustratif et non limitatif.

Selon l'invention, l'appareil de cuisson comporte un moyen de fuite calibré permettant à l'autocuiseur d'être purgé, de préférence totalement, en air avant la régulation sous pression normale de l'appareil ou le maintien du niveau de pression (dans le cas d'autocuiseurs disposant d'un indicateur visuel de pression), correspondant à la phase proprement dite de cuisson. Selon l'invention, le moyen de fuite calibré pourra être de plusieurs types correspondant à son mode de déclenchement. Ainsi le paramètre de déclenchement pourra être la température atteinte par le milieu gazeux, la pression dudit milieu gazeux ou encore un intervalle de temps prédéfini correspondant donc sensiblement à une température ou une pression de référence estimée.

Le principe général de l'invention repose sur la réalisation d'un système ou moyen de fuite calibré permettant de laisser échapper l'air, jusqu'à une température ou une pression donnée tout en permettant une montée simultanée en pression de l'appareil pour obtenir au total un temps de cuisson court.

Ainsi, l'appareil de cuisson domestique sous pression conforme à l'invention comporte un moyen de fuite calibré bistable, susceptible de prendre d'une part une position d'ouverture dans laquelle la montée continue en pression de l'appareil au delà d'une pression P₀ déterminée est permise, tout en autorisant une purge de l'air de l'appareil ou d'autre part une position de fermeture correspondant à une absence de fuite d'air vers l'extérieur, ladite position d'ouverture étant maintenue pendant un intervalle de temps Δt prédéterminé après l'atteinte de P₀ ou de sa valeur de température correspondante T₀, ou jusqu'à l'atteinte de valeurs prédéterminées de pression ou de température régnant dans l'appareil, respectivement P₁ et T₁, avec P₁> P₀ et T₁>T₀.

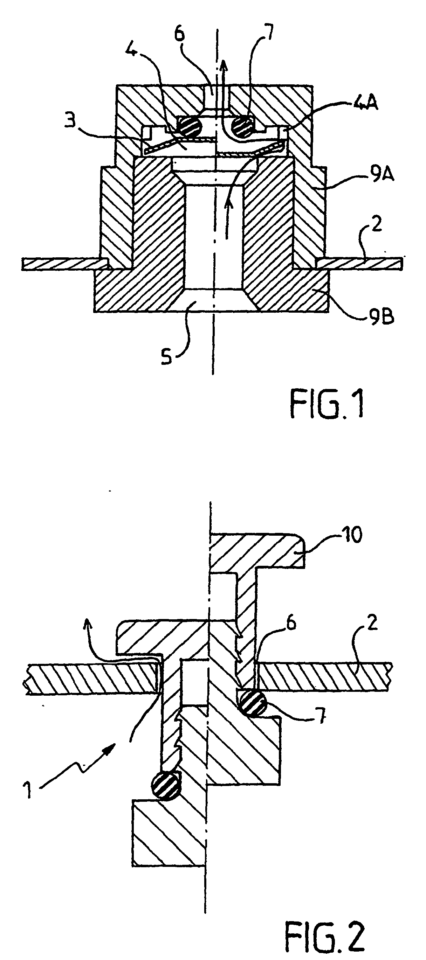

Ainsi, selon une première variante de réalisation, tel qu'illustré à la figure 1, le moyen de fuite calibré peut être sensible à la température et être formé par un bilame 3, par exemple de forme discoïde, intégré dans une chambre 4 délimitée entre deux pièces rapportées l'une sur l'autre, par exemple par emboîtement, vissage ou sertissage notamment, et formé par des corps supérieur 9A et inférieur 9B montés l'un dans l'autre dans une perforation du couvercle 2. Le corps supérieur 9A est en relation avec l'extérieur de l'autocuiseur, et donc la pression atmosphérique, par l'intermédiaire d'une ouverture calibrée 6 de forme quelconque, et par exemple circulaire ou ovale. Le corps inférieur 9B est en relation avec l'intérieur de l'autocuiseur par l'intermédiaire d'un orifice interne 5, de forme quelconque et est par exemple aligné axialement avec l'ouverture calibrée 6.

Avantageusement, tel qu'illustré à la figure 1, le bilame 3 peut être maintenu en position par sa périphérie à l'aide de créneaux ajourés 4A solidaires du corps supérieur 9A, la surface totale des sections de passage des créneaux ajourés étant bien évidemment supérieure à la surface de l'ouverture calibrée 6, de manière à permettre le passage libre et sans contrainte de l'air et de la vapeur provenant de l'intérieur de l'autocuiseur et s'échappant par l'ouverture calibrée 6. Un joint torique 7 est positionné dans un évidement du corps supérieur 9A de manière à entourer l'ouverture calibrée 6 et à servir de support étanche pour le bilame 3 lorsqu'il occupe sa position haute d'étanchéité, tel qu'illustré dans la partie gauche de la figure 1.

Ainsi, dans sa position illustrée à la partie droite de la figure 1, le bilame 3 est maintenu en position ouverte, de telle sorte que lors du début du cuisson, il puisse laisser passer l'air de l'autocuiseur par sa périphérie à travers les ajourages des créneaux, l'air s'échappant alors à travers l'ouverture calibrée 6. Dans la position du bilame 3 illustrée à la partie gauche de la figure 1, le bilame, après avoir changé de forme en raison de l'élévation de température interne à l'autocuiseur, vient en position de butée étanche contre le joint torique 7 et vient fermer lui-même directement l'ouverture calibrée 6 à partir d'une température T₁ caractéristique du bilame 3 et correspondant à la déformation des matériaux le composant.

Tel que cela est bien connu de l'homme du métier, les caractéristiques de déformation des bilames étant réversibles, la température redescendant en fin de cuisson, le bilame 3 reviendra à sa position initiale d'ouverture correspondant à la partie gauche de la figure 1.

Ainsi, selon l'invention, la fuite d'air permise par l'ouverture calibrée 6 est suffisamment faible et maîtrisée pour permettre une montée en pression non perturbée et normale de l'autocuiseur, tout en permettant à ladite ouverture calibrée 6 de laisser échapper l'air, jusqu'à l'atteinte de la température de fermeture du dispositif qui sera au moins égale à 100°C ± 2°C, ou de préférence égale à 102°C ± 2°C, la température de fermeture pouvant aller jusqu'à environ 104°C. Après la fermeture, la température optimale de cuisson des aliments sera atteinte, et sera de l'ordre de 105 à 120°C.

De manière avantageuse, le moyen de fuite calibré selon l'invention comprend, pour satisfaire aux conditions de température de fermeture énoncées précédemment, au moins une ouverture calibrée 6 permettant une fuite équivalente à l'ouverture d'une section comprise entre 1,75 mm² et 4,15 mm², de préférence de l'ordre de 2,80 mm² environ, et un élément d'obturation, en l'occurrence le bilame 3, monté mobile et en association avec ladite au moins une ouverture calibrée 6.

Différents paramètres variables ont été pris en compte pour déterminer les bornes de cette section préférentielle de fuite calibrée, tout en ayant à l'esprit que l'objectif visé a pour objectif d'assurer :
- une purge d'air efficace qui peut respecter un écart faible par rapport à la courbe théorique de pression de vapeur d'eau / température,
- une fiabilité du dispositif qui doit agir malgré ces différents paramètres et les dispersions inévitables liées aux conditions d'essais et aux pièces constituant le dispositif.

Les paramètres influant pris en compte ont été : le temps de purge, la pression de fonctionnement, la puissance de chauffe, le niveau de remplissage de l'autocuiseur ainsi que la température moyenne de la vapeur.

A titre de variante de réalisation, non représentée aux figures, le moyen de fuite calibré peut comprendre, en tant que moyen réagissant à la température régnant dans l'appareil et à la place d'un bilame 3, un vérin à cire ou une électrovanne associée à un capteur de température ou tout moyen équivalent. A titre de variante complémentaire, tel qu'illustré à la figure 2, le moyen de fuite d'air calibré peut comprendre un moyen réagissant à la pression régnant dans l'appareil. Selon cette variante, le moyen de fuite calibré peut comprendre une soupape à poids 10 montée à coulissement libre dans un perçage du couvercle 2 entre deux positions de butée. Dans la position de la soupape 10 illustrée sur la partie gauche de la figure 2, la conformation et les dimensions respectives du perçage et de la soupape 10 sont telles qu'un orifice calibré 6 est ménagé périphériquement entre la soupape 10 et le couvercle 2, permettant à l'air ou à la vapeur de s'échapper jusqu'à l'atteinte d'une pression de valeur prédéterminée P₁. A l'inverse, la partie inférieure de la soupape 10 étant pourvue d'un joint torique 7 supporté par une collerette, lorsque la pression prédéterminée P₁ est atteinte, la soupape 10 atteint sa position haute illustrée sur la partie droite de la figure 2, le joint torique 7 venant fermer l'ouverture calibrée 6 de manière étanche.

Ainsi, selon l'invention, le moyen de fuite calibré bistable est formé par l'association d'une ouverture calibrée 6 et d'un moyen sensible à la température ou la pression, ou encore permettant de décompter un intervalle de temps et venant obturer ou libérer ladite ouverture calibrée 6.

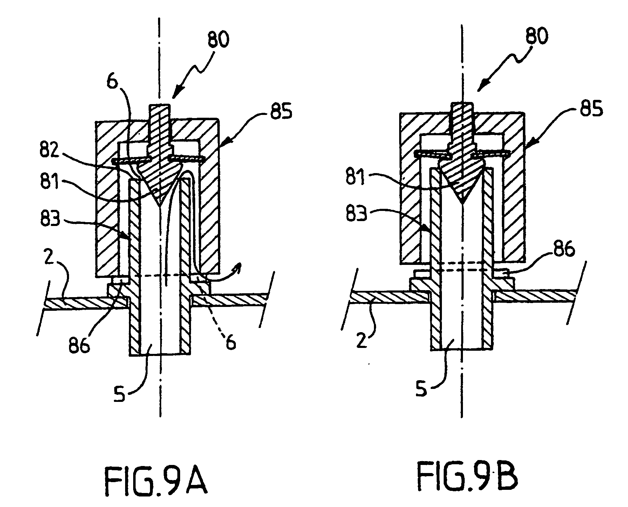

A titre de variante complémentaire, tel qu'illustré aux figures 9A et 9B, le bilame 3 peut être associé à une soupape à poids 80 pourvue à une extrémité d'un pointeau 81 destiné à venir engager un siège de réception formé par la partie supérieure 82 d'un corps tubulaire creux et traversant 83 rapporté par tout moyen connu sur le couvercle 2 et mettant en communication par l'intermédiaire de l'orifice 5 l'intérieur de l'autocuiseur avec l'extérieur. Selon cette variante, le bilame 3 est monté solidaire à l'intérieur d'un corps supérieur 85 formant un capuchon et destiné à venir coiffer le corps tubulaire 83 et à venir, en position de repos, en appui sur des picots 86 délimitant une collerette ajourée faisant saillie radialement à partir dudit corps tubulaire 83. Selon cette réalisation, le bilame 3, s'étendant transversalement à l'intérieur du corps supérieur 85, est pourvu d'une lumière centrale dans laquelle est montée axialement et fixée la soupape à poids 80, laquelle fait également saillie axialement hors du corps supérieur 85 par un perçage dans lequel elle coulisse librement, de telle façon qu'en début de cuisson (figure 9A), l'orifice calibré 6 délimité entre la périphérie du pointeau 81 et la partie supérieure 82 soit libre, correspondant donc à une position de purge ouverte dans laquelle le moyen de fuite calibré permet de laisser échapper l'air. Lorsque la température correspondant au changement de forme du bilame 3 a été atteinte (figure 9B), le changement de forme du bilame 3 permet au corps supérieur 85 de se déplacer axialement vers le haut et au pointeau 81 de se déplacer en sens inverse et de venir obturer l'ouverture calibrée 6 en reposant de manière étanche contre l'extrémité supérieure 82.

Selon cette variante, le bilame 3 et la soupape à poids 80 peuvent être prémontés dans ou sur le corps supérieur 85 pour ne former qu'une seule pièce monobloc, qui peut de plus être facilement mise en place par l'utilisateur lui-même sur le corps principal 83.

Selon cette variante de réalisation, le moyen de fuite d'air calibré comprend donc une soupape à poids 80 supportée par un bilame 3 lui-même supporté par le corps principal 3 qui est destiné à être monté en regard de l'ouverture 5 du couvercle 2, de telle façon que l'ouverture calibrée 6 est définie entre ladite soupape à poids 80 et l'ouverture 5 formant le siège de réception étanche pour la soupape lorsque le bilame 3 est en position de fermeture (figure 9B), correspondant à une purge fermée et à des conditions de température T₁. Selon cette variante, l'ouverture 5 est donc surmontée par un corps tubulaire 83 dont la partie supérieure 82 forme le siège de réception de la soupape à poids 80, le corps principal 85 étant formé par un capuchon amovible destiné à venir coiffer ledit corps tubulaire 83.

A titre de variante complémentaire, l'ouverture calibrée 6 peut être également formée par la (les) ouverture(s) délimitée(s) par les picots 86 de la collerette ajourée (figure 9A). Selon cette variante, les moyens techniques mis en oeuvre sont identiques à la variante précédente, mais agencés sensiblement différemment. Ainsi, le moyen de fuite d'air calibré comprend une soupape à poids 80 supportée par un bilame 3 lui-même supporté par un corps tubulaire 83 destiné à être monté en regard d'une ouverture 5 du couvercle 2, ladite ouverture 5 formant le siège de réception étanche pour la soupape 80 lorsque le bilame 3 est en position fermée, l'ouverture calibrée 6 étant formée par des ouvertures délimitées dans une collerette ajourée formant une butée pour le corps tubulaire 83 lorsque la purge est ouverte.

Avantageusement, l'appareil de cuisson conforme à l'invention pourra également comporter un moyen de sécurité à la fermeture / ouverture de l'autocuiseur, du genre soupape, dont la position est sensible à la pression régnant dans la cuve, et qui est monté mobile entre deux positions stables de butée, la première dans laquelle ledit moyen de sécurité met en communication l'intérieur de la cuve avec l'extérieur en-deçà de la pression P₀ déterminée, la seconde dans laquelle ledit moyen ferme la communication de la cuve avec l'extérieur lorsque la pression P₀ est atteinte pour permettre la montée en pression de l'appareil et la cuisson. Ces moyens de sécurité à la fermeture / ouverture sont bien connus de l'homme du métier et permettent de s'assurer que le couvercle est bien en position de verrouillage stable sur la cuve, la soupape ne pouvant se déplacer sous la pression que si ladite position stable de verrouillage est effectivement atteinte. Ceci permet d'éviter une montée en pression alors qu'une mauvaise position de verrouillage est atteinte. Inversement, le montage de tels moyens de sécurité à la fermeture / ouverture évite une ouverture de l'appareil inopinée alors qu'une pression résiduelle demeure dans l'appareil, puisque seule la position basse de la soupape de sécurité permet l'ouverture de l'appareil.

L'association du moyen de fuite calibré bistable conforme à l'invention avec un moyen de sécurité à la fermeture / ouverture permet donc de bénéficier d'un autocuiseur parfaitement sûr, dont le déclenchement du système de sécurité est précoce, ce qui procure une bonne sécurité à l'utilisateur tout en permettant une purge efficace de l'appareil, grâce à l'existence d'une fuite calibrée ne perturbant pas la montée de la soupape du moyen de sécurité à la fermeture.

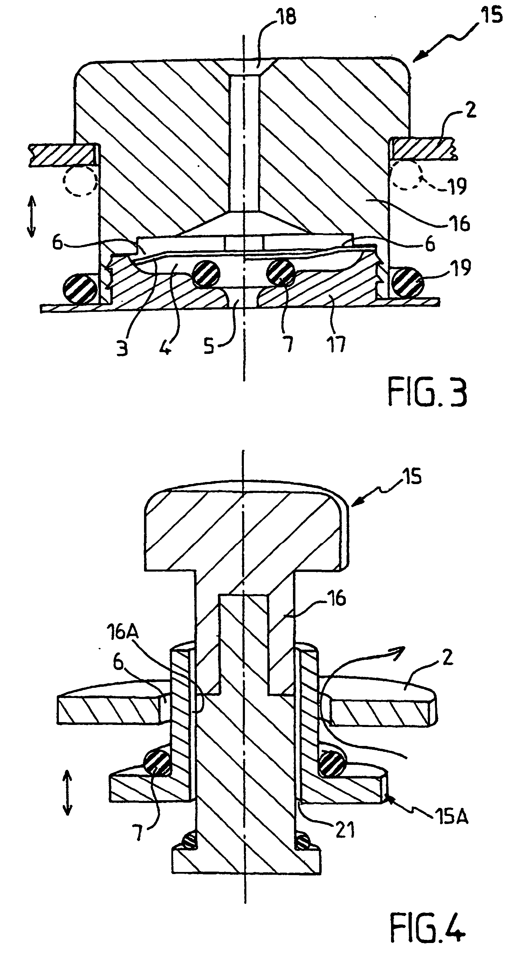

Selon des variantes de réalisation particulièrement intéressantes, l'appareil selon l'invention comporte un moyen de fuite d'air calibré qui est intégré dans le moyen de sécurité lui-même. Les variantes de l'invention correspondant à ce montage sont illustrées aux figures 3, 4 et 7.

Dans les variantes préférentielles de l'invention illustrées aux figures 3, 4 et 7, le moyen de fuite calibré bistable est intégré ou supporté dans un doigt d'Aroma 15 qui constitue un moyen de sécurité à la fermeture de l'autocuiseur au sens de l'invention. Le doigt d'Aroma 15, qui est du genre tige manométrique, est chargé d'assumer la fonction de verrouillage à l'ouverture et à la fermeture du couvercle 2 sur la cuve dès qu'une pression minimale, de l'ordre de 4 kPa par exemple, est atteinte dans l'autocuiseur. En effet, dès que cette valeur de pression minimale est atteinte, le doigt d'Aroma s'élève de sa position basse de butée (tel qu'illustré à la figure 3) pour atteindre sa position haute de butée dans laquelle l'étanchéité à la pression de l'autocuiseur est assurée. Dans cette position haute de butée, le doigt d'Aroma vient s'engager dans une lumière correspondante ménagée dans un organe fixe de l'autocuiseur, par exemple solidaire d'une poignée de cuve, de telle sorte que l'ouverture ou la fermeture de l'autocuiseur est empêchée. De tels moyens de sécurité étant bien connus de l'homme de l'art, ils ne seront pas décrits plus en détails ci-après.

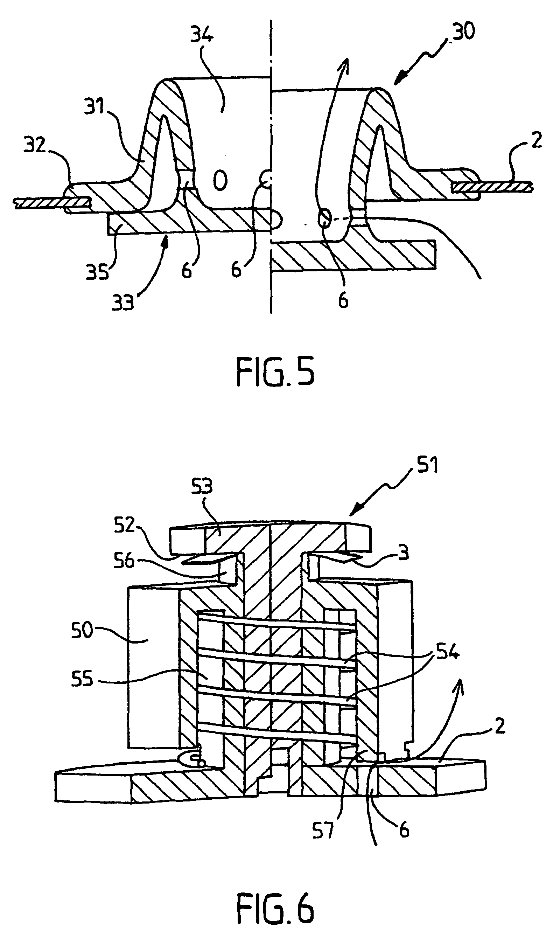

La variante illustrée à la figure 3 comporte un bilame 3 monté dans une chambre 4 ménagée entre la partie inférieure du corps 16 du doigt d'Aroma 15 et une pièce rapportée 17 sur ladite partie inférieure. La chambre 4 est en relation de fluide avec l'extérieur et l'intérieur de l'autocuiseur respectivement par un canal traversant 18 ménagé à travers le corps 16, et par une ouverture 5 ménagée, de préférence alignée axialement avec le canal 18, à travers la pièce rapportée 17. Le bilame 3 est maintenu et supporté en partie au moins de manière élastique par un joint torique 7 dans la chambre 4 et obture, tel qu'illustré dans la demi-partie droite de la figure 3, l'ouverture calibrée 6 dès que la valeur de la température minimale déterminée T₁ est atteinte dans l'autocuiseur. La demi-partie gauche de la figure 6 montre le bilame 3 en position d'ouverture de l'ouverture calibrée 6 correspondant à une déformation du bilame 3 associée à une valeur de température inférieure à la température prédéterminée T₁. Dans cette position d'ouverture, une purge de l'autocuiseur peut être effectuée par l'intermédiaire de l'orifice 5 et du canal 18 à travers l'ouverture calibrée 6, bien que le doigt d'Aroma 15 occupe sa position haute d'étanchéité, le joint torique annulaire 19 étant en appui élastique étanche contre la face inférieure du couvercle 2. Dans cette position, la montée en pression est réalisée dès le début de la cuisson dans l'autocuiseur, alors qu'une purge du mélange air / vapeur peut être effectuée simultanément. Selon cette variante, le moyen de fuite d'air calibré est intégré dans le doigt d'Aroma 15 et comporte, en tant qu'élément d'obturation mobile, un bilame supporté par ledit doigt d'Aroma 15.

La variante de réalisation illustrée à la figure 4 est une réalisation dans laquelle le système de purge conforme à l'invention réagit à la pression. Selon cette variante, le moyen de fuite calibré est intégré dans un premier doigt d'Aroma 15 et formé par un second doigt d'Aroma 15A, concentrique (disposé extérieurement ou de préférence intérieurement) audit premier doigt d'Aroma 15, et monté mobile axialement relativement à ce dernier. Cette variante correspond donc à un double doigt d'Aroma dans laquelle le premier doigt d'Aroma 15 assure l'étanchéité à la pression de l'appareil dès l'atteinte d'un premier niveau de pression, de l'ordre de 4 kPa par exemple, en venant fermer l'orifice de sortie 21 ménagé entre la périphérie externe du corps 16 et la périphérie interne 16A du second doigt d'Aroma 15A. Dans cette position de butée haute du premier doigt d'Aroma 15, le second doigt d'Aroma 15A est réglé pondéralement et dimensionné pour dégager l'ouverture calibrée 6 ménagée entre la périphérie externe du corps 16A et un perçage de l'autocuiseur, situé avantageusement dans le couvercle 2. Dans cette position, bien que la montée en pression de l'autocuiseur soit réalisée, une purge peut s'effectuer avant l'atteinte de la pression de cuisson définitive. Dès que la pression définitive de fonctionnement est atteinte, le second doigt d'Aroma 15A vient occuper sa position haute de butée dans laquelle le joint torique 7 vient fermer, de manière élastique et étanche, l'ouverture calibrée 6.

La variante de réalisation illustrée à la figure 5 montre un moyen de fuite calibré formé d'un élément de joint déformable 30 sous l'effet de la pression pour venir étancher au moins une, et de préférence plusieurs ouvertures calibrées 6. Selon cette variante, le joint déformable 30 est intégré dans un perçage de l'autocuiseur, et par exemple du couvercle 2, et comporte une membrane déformable 31 reliée, par exemple par encastrement, par l'une de ses extrémités 32 au bord du perçage, et définissant vers l'autre de ses extrémités 33 un puits central 34 à travers la paroi duquel est ménagé au moins un trou calibré 6. Cette configuration définit une sorte de collerette bombée dont la zone centrale est repliée intérieurement et ouverte pour former le puits central 34. Le puits central 34 se termine par une face d'étanchéité 35 formant une collerette d'étanchéité destinée à venir se bloquer contre le corps du joint formé par la face inférieure de l'extrémité 32, à partir d'une valeur de pression prédéterminée au moins égale à une valeur de référence P₁. La demi-partie gauche de la figure 5 montre la position d'étanchéité de la membrane déformable 30 qui est atteinte à partir d'une valeur de pression prédéterminée P₁, alors que la demi-partie droite de la figure 5 montre la position d'ouverture de ladite membrane déformable 30. Dans cette position d'ouverture, une purge de l'autocuiseur peut être effectuée alors même que sa montée en pression peut s'effectuer simultanément de manière classique.

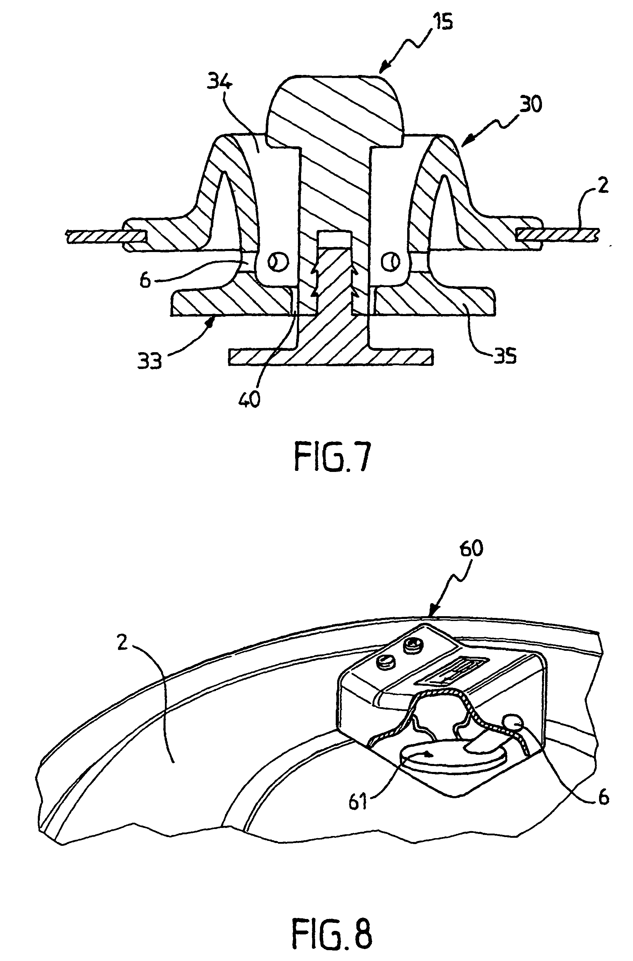

La figure 7 illustre une variante reprenant le montage d'un joint déformable 30 illustré à la figure 5. Selon cette variante de réalisation, le joint déformable 30 intègre un doigt d'Aroma classique 15 qui est monté à coulissement libre dans le puits central 34 entre deux positions stables de butée. Tel qu'illustré, la face d'étanchéité 35 est pourvue d'un trou 40 dans lequel est monté à coulissement libre le doigt d'Aroma 15, les deux côtés de la face d'étanchéité 15 autour du trou 40 formant un siège d'étanchéité pour les deux positions de butée du doigt d'Aroma 15. On obtient ainsi un système de purge conforme à l'invention associé à un moyen de sécurité à la fermeture / ouverture de l'autocuiseur.

La variante de réalisation illustrée à la figure 6 montre un système de purge conforme à l'invention qui est intégré dans une rampe 50 d'une soupape 51. La rampe de soupape 50 est montée élastiquement mobile en position de rappel contre le col 52 d'une soupape 53 par l'intermédiaire d'un ressort hélicoïdal 54 interposé, dans un logement 55 de la rampe 50, entre ladite rampe 50 et le couvercle 2. Un bilame 3 est interposé entre le col 52 et la tête 56 de la rampe 50. Dans la position d'ouverture du bilame 3, une jambe 57 de la rampe 50, située à sa partie inférieure, vient dégager une ouverture calibrée 6 ménagée à travers le couvercle 2, permettant ainsi à la purge de s'effectuer. Lorsque la température dans l'enceinte de cuisson atteint le seuil de déclenchement du bilame 3, ce dernier se retourne et permet la fermeture de l'ouverture calibrée 6 par la jambe 57, par déplacement axial de la rampe 50 à l'encontre de la force élastique exercée par le ressort hélicoïdal 54. Dans cette position, l'étanchéité du système de purge est obtenu, le moyen de fuite calibré selon l'invention comprenant alors un bilame 3 monté en appui élastique contre la rampe 50 de la soupape 51, la rampe étant montée mobile relativement à l'ouverture calibrée 6, de manière à ce que la rampe vienne ouvrir ou fermer ladite ouverture calibrée 6 selon la position du bilame 3.

La variante de réalisation illustrée à la figure 8 montre un appareil de cuisson domestique sous pression conforme à l'invention, comportant un moyen de fuite calibré bistable autorisant une purge de l'air de l'appareil, ladite purge étant maintenue pendant un intervalle de temps Δt prédéterminé après l'atteinte d'une valeur de pression P₀ déterminée ou de sa valeur de température correspondante T₀.

Selon cette variante, l'appareil est équipé d'un timer 60 de type classique équipé d'un minuteur pour décompter le temps Δt prédéterminé à partir de l'atteinte de la pression ou de la température de référence P₀ ou T₀, ainsi qu'un système 61 d'ouverture et de fermeture d'une ouverture calibrée 6. Le système 61 incorpore également un capteur de température ou de pression pour capter l'atteinte de la pression P₀ ou de la température T₀. Cet ensemble forme un moyen de fuite calibré 60 intégré de préférence dans le couvercle 2 de l'autocuiseur. En début de cuisson, le timer décompte le temps Δt prédéterminé permettant à l'air d'être totalement purgé de l'autocuiseur par l'intermédiaire du trou calibré 6. Lorsque le temps Δt prédéterminé est atteint, le système d'ouverture et de fermeture 61 ferme le trou calibré 6. En fin de cuisson, le capteur de température de pression intégré dans le timer peut capter la baisse de pression ou de température et autoriser ainsi la réouverture du moyen de fuite d'air calibré conforme à l'invention.

Dans tous les exemples mentionnés précédemment, le moyen de fuite calibré a été présenté comme étant de préférence intégré ou monté dans le couvercle 2 de l'autocuiseur. Au sens de l'invention, il est néanmoins possible d'intégrer un tel moyen de fuite calibré dans d'autres parties de l'autocuiseur, et notamment dans la cuve ou dans des organes de préhension, sans pour autant sortir du cadre de l'invention.

De la même façon, il a été présenté dans les exemples précédents un appareil de cuisson dont le moyen de fuite calibré autorise une purge de l'appareil en fonction du déplacement d'un élément d'obturation monté mobile, un tel élément pouvant, au sens de l'invention, être commandé par tous moyens bien connus de l'homme du métier, et notamment par ondes du type ondes radio-électromagnétiques.

L'invention concerne également un procédé de cuisson d'aliments sous pression de vapeur dans une enceinte fermée, dans lequel on assure la montée en pression ou en température de l'enceinte contenant les aliments. Avantageusement, la montée en pression ou en température de l'enceinte est assurée par l'intermédiaire de moyens de sécurité à l'ouverture ou à la fermeture de l'autocuiseur, lesdits moyens de sécurité étant sensibles à la pression et venant fermer l'enceinte à partir d'une pression déterminée, de préférence inférieure ou égale à 4 kPa. Selon l'invention, le procédé est caractérisé en ce que :
- on assure une étape de purge de l'air et de la vapeur de l'enceinte, tout en permettant la montée en pression de l'enceinte pendant un temps suffisant pour assurer la purge sensiblement totale de l'enceinte, ou jusqu'à une pression ou température prédéterminée,
- puis on arrête la purge en rendant l'enceinte totalement étanche,
- et on procède à la cuisson sous pression des aliments.

Avantageusement, on assure la montée en pression ou en température de l'enceinte contenant les aliments par l'intermédiaire de moyens de sécurité à l'ouverture de l'appareil sensibles à la pression et venant fermer l'enceinte à partir d'une pression déterminée, de préférence inférieure ou égale à 4 kPa et on assure l'étape de purge de l'air et de la vapeur à partir de la fermeture des moyens de sécurité.

De préférence, le procédé selon l'invention permet d'assurer une purge d'air, pour permettre une cuisson des aliments en monophase vapeur totale.

De manière préférentielle, on assure l'étape de purge jusqu'à atteindre une température moyenne de l'enceinte d'au moins 96°C environ, ou jusqu'à atteindre une pression moyenne de l'ordre de 150 mb au moins.

De préférence, l'étape de purge s'effectue donc dans une plage de température comprise entre 96°C et 104°C, et de manière encore plus préférentielle entre 96°C et 102°C.

Il s'avère ainsi que le système de purge selon l'invention permet un gain de temps notable sur le temps total de cuisson, ainsi qu'une montée en température des aliments plus rapide permettant une meilleure rétention des vitamines en raison de l'absence d'un mélange air / vapeur dans l'enceinte de cuisson. Le système selon l'invention permet également de respecter les lois générales définissant la montée en température de l'eau sous pression, ainsi que de limiter la perte des vitamines et des sels minéraux des aliments.

De surcroît, la purge de l'air permet d'éviter une oxydation des aliments, gage d'une cuisson de qualité.

## Revendications

1. Appareil de cuisson domestique sous pression comprenant une cuve de cuisson et un couvercle (2) destiné à être verrouillé sur la cuve pour permettre la montée en pression de l'appareil, ledit appareil comportant un moyen de fuite calibré bistable (3, 6, 10, 30, 51, 60, 80) susceptible de prendre d'une part une position d'ouverture dans laquelle la montée continue en pression de l'appareil au-delà d'une pression P₀ déterminée est permise, tout en autorisant une purge de l'air de l'appareil ou d'autre part une position de fermeture correspondant à une absence de fuite d'air vers l'extérieur, ladite position d'ouverture étant maintenue pendant un intervalle de temps Δt prédéterminé après l'atteinte de P₀ ou de sa valeur de température correspondante T₀, ou jusqu'à l'atteinte de valeurs prédéterminées de pression ou de température régnant dans l'appareil, respectivement P₁ et T₁, avec P₁>P₀ et T₁>T₀, **caractérisé en ce que** le moyen de fuite d'air calibré comprend au moins une ouverture calibrée (6) permettant une fuite équivalente à l'ouverture d'une section comprise entre 1,75 mm² et 4,15 mm² et un élément d'obturation monté mobile (3, 10, 30, 51, 60) associé à ladite au moins une ouverture calibrée (6).

2. Appareil selon la revendication 1 **caractérisé en ce que** l'ouverture calibrée (6) permet une fuite équivalente à l'ouverture d'une section de l'ordre de 2,80 mm² environ.

3. Appareil selon l'une des revendications précédentes **caractérisé en ce que** le moyen de fuite d'air calibré comprend un moyen (3) réagissant à la température régnant dans l'appareil.

4. Appareil selon la revendication 3 **caractérisé en ce que** le moyen de fuite d'air calibré comprend un bilame (3), un vérin à cire ou une électrovanne associé(e) à un capteur de température.

5. Appareil selon la revendication 4 **caractérisé en ce** le moyen de fuite d'air calibré comprend une soupape à poids (80) supportée par un bilame (3) lui-même supporté par un corps principal (85) destiné à être monté en regard d'une ouverture (5) du couvercle (2), de telle façon que l'ouverture calibrée (6) est définie entre ladite soupape et l'ouverture (5) formant le siège de réception étanche pour la soupape (80) lorsque le bilame (3) est en position de purge fermée.

6. Appareil selon la revendication 5 **caractérisé en ce que** l'ouverture (5) est surmontée par un corps tubulaire (83) dont la partie supérieure (82) forme le siège de réception de la soupape (80), le corps principal (85) étant formé par un capuchon amovible destiné à venir coiffer ledit corps tubulaire (83).

7. Appareil selon la revendication 4 **caractérisé en ce que** le moyen de fuite d'air calibré comprend une soupape à poids (80) supportée par un bilame (3) lui-même supporté par un corps tubulaire (83) destiné à être monté en regard d'une ouverture (5) du couvercle (2), ladite ouverture (5) formant le siège de réception étanche pour la soupape (80) lorsque le bilame (3) est en position fermée, l'ouverture calibrée (6) étant formée par des ouvertures délimitées dans une collerette ajourée formant une butée pour le corps tubulaire (83) lorsque la purge est ouverte.

8. Appareil selon l'une des revendications 1 ou 2 **caractérisé en ce que** le moyen de fuite d'air calibré comprend un moyen (10, 30) réagissant à la pression régnant dans l'appareil.

9. Appareil selon la revendication 8 **caractérisé en ce que** le moyen de fuite calibré est formé d'un élément de joint déformable (30) sous l'effet de la pression pour venir étancher le trou calibré (6).

10. Appareil selon la revendication 9 **caractérisé en ce que** le joint déformable (30) est intégré dans un perçage de la paroi de l'appareil, et comporte une membrane déformable avec un puits central (34) dans lequel est ménagé au moins un trou calibré (6), ledit puits central se terminant par une face d'étanchéité (35) destinée à venir se bloquer contre le corps du joint formant un siège d'étanchéité à partir d'une pression au moins égale à P₁.

11. Appareil selon les revendications 3 et 4 **caractérisé en ce que** le moyen de fuite calibré (51) est intégré dans la rampe (50) de la soupape de sécurité (53).

12. Appareil selon la revendication 11 **caractérisé en ce que** le moyen de fuite calibré comprend un bilame (30) monté en appui élastique contre la rampe (50) de la soupape (53), la rampe (50) étant montée mobile relativement au trou calibré (6) de manière à ce que la rampe (50) vienne ouvrir ou fermer le trou calibré (6) selon la position du bilame (30).

13. Appareil selon l'une des revendications 1 ou 2 **caractérisé en ce que** le moyen de fuite d'air calibré comprend un capteur de température ou de pression pour capter l'atteinte de la pression P₀ ou de la température T₀, et un minuteur (60) pour décompter le temps Δt prédéterminé à partir de l'atteinte de P₀ ou T₀, et un système d'ouverture et de fermeture (61) du trou calibré (6).

14. Appareil selon l'une des revendications 1 à 13 **caractérisé en ce que** le moyen de fuite calibré (3, 6, 10, 30, 51, 60) est agencé sur le couvercle (2) de l'appareil de cuisson.

15. Procédé de cuisson d'aliments sous pression de vapeur dans une enceinte fermée dans lequel :
- on assure la montée en pression ou en température de l'enceinte contenant les aliments,
- on assure une étape de purge de l'air de l'enceinte, tout en permettant la montée en pression de l'enceinte pendant un temps suffisant pour assurer la purge sensiblement totale de l'enceinte, ou jusqu'à une pression ou température prédéterminée,
- puis on arrête la purge en rendant l'enceinte totalement étanche,
- et on procède à la cuisson sous pression des aliments,
**caractérisé en ce qu'**on assure la purge de l'air par au moins une ouverture calibrée (6) permettant une fuite équivalente à l'ouverture d'une section comprise entre 1,75 mm² et 4,15 mm², de préférence de l'ordre de 2,80 mm² environ.

16. Procédé selon la revendication 15 **caractérisé en ce qu'**on assure une purge d'air totale pour permettre une cuisson des aliments en monophase vapeur totale.

17. Procédé selon l'une des revendications 15 ou 16 **caractérisé en ce qu'**on assure l'étape de purge jusqu'à atteindre une température moyenne de l'enceinte de ou d'au moins 96°C environ, ou jusqu'à atteindre une pression moyenne de l'ordre de 150 mb au moins.

18. Procédé selon la revendication 17 **caractérisé en ce que** l'étape de purge s'effectue dans une plage comprise entre 96°C et 104°C, de préférence entre 96°C et 102°C.

## Patentansprüche

1. Dampfdruck-Kochgerät für den Hausgebrauch mit einem Kochtopf und einem auf dem Topf zu verriegelnden Deckel (2), damit das Gerät einen Druck aufbauen kann, wobei das Gerät ein bistabiles kalibriertes Ausströmmittel (3, 6, 10, 60, 80) umfasst, das geeignet ist, einerseits eine Öffnungsstellung einzunehmen, bei der ein stetiger Druckaufbau des Geräts über einen festgesetzten Druck P₀ hinaus ermöglicht wird, obwohl die Luft aus dem Gerät entweichen kann, und andererseits eine Schließstellung einzunehmen, bei der keine Luft nach außen ausströmen kann, wobei die Öffnungsstellung eine vorbestimmte Zeitspanne Δt nach Erreichen von P₀ oder dem Wert für die entsprechende Temperatur T₀ oder bis zum Erreichen vorbestimmter in dem Gerät herrschender Werte P₁ bzw T₁ für den Druck oder die Temperatur, mit P₁>P₀ und T₁>T₀, beibehalten wird, **dadurch gekennzeichnet, dass** das kalibrierte Ausströmmittel für Luft mindestens eine kalibrierte Öffnung (6), mit der sich ein einer Querschnittsöffnung zwischen 1,75 mm² und 4,15 mm² entsprechendes Ausströmmen erzielen lässt sowie ein beweglich angebrachtes Absperrelement (3, 10, 30, 51, 60) aufweist, das der mindestens einen kalibrierten Öffnung (6) zugeordnet ist.

2. Gerät nach Anspruch 1, **dadurch gekennzeichnet, dass** sich mit der kalibrierten Öffnung (6) ein einer Querschnittsöffnung der ungefähren Größenordnung von 2,80 mm² entsprechendes Ausströmen erzielen lässt .

3. Gerät nach einem der vorhergehenden Ansprüche, **dadurch gekennzeichnet, dass** das kalibrierte Mittel zum Ausströmen der Luft ein Mittel (3) enthält, das auf die im Gerät herrschende Temperatur anspricht.

4. Gerät nach Anspruch 3, **dadurch gekennzeichnet, dass** das kalibrierte Mittel zum Ausströmen der Luft einen Bimetallstreifen (3), einen Wachszylinder oder ein Elektroventil aufweist, die jeweils einem Temperaturfühler zugeordnet sind.

5. Gerät nach Anspruch 4, **dadurch gekennzeichnet, dass** das kalibrierte Mittel zum Ausströmen der Luft ein Gewichtsventil (80) aufweist, das von einem Bimetallstreifen (3) gehalten wird, welcher selbst von einem Hauptkörper (85) gehalten wird, der gegenüber einer Öffnung (5) des Deckels (2) so angebracht ist, dass sich die kalibrierte Öffnung (6) definitionsgemäß zwischen dem Ventil und der Öffnung (5) befindet, welche den Sitz für die dichtende Aufnahme des Ventils (80) bildet, wenn der Bimetallstreifen (3) sich für das Ausströmen in Schließstellung befindet.

6. Gerät nach Anspruch 5, **dadurch gekennzeichnet, dass** der Öffnung (5) ein röhrenförmiger Körper (83) aufsitzt, dessen oberer Abschnitt (82) den Sitz für die Aufnahme des Ventils (80) bildet, wobei der Hauptkörper (85) von einer abnehmbaren Schutzkappe gebildet wird, die den röhrenförmigen Körper (83) überdeckt.

7. Gerät nach Anspruch 4, **dadurch gekennzeichnet, dass** das kalibrierte Mittel zum Ausströmen der Luft ein Gewichtsventil (80) aufweist, das von einem Bimetallstreifen (3) gehalten wird, welcher selbst von einem röhrenförmigen Körper (83) gehalten wird, der gegenüber einer Öffnung (5) des Deckels (2) angebracht ist, wobei die Öffnung (5) den Sitz für die dichtende Aufnahme für das Ventil (80) bildet, wenn der Bimetallstreifen sich in Schließstellung befindet und wobei die kalibrierte Öffnung (6) von Öffnungen gebildet wird, die in einem durchbrochenen Bördelflansch begrenzt sind, welcher für den röhrenförmigen Körper (83) bei geöffnetem Auslass einen Anschlag bildet.

8. Gerät nach einem der Ansprüche 1 oder 2 **dadurch gekennzeichnet, dass** das kalibrierte Mittel zum Ausströmen der Luft ein Mittel (10, 30) aufweist, das auf den im Gerät herrschenden Druck anspricht.

9. Gerät nach Anspruch 8, **dadurch gekennzeichnet, dass** das kalibrierte Ausströmmittel von einem unter der Einwirkung des Drucks deformierbaren Verbindungsmittel (30) gebildet wird, um das kalibrierte Loch (6) abzudichten.

10. Gerät nach Anspruch 9, **dadurch gekennzeichnet, dass** das deformierbare Verbindungsmittel (30) in eine Bohrung der Gerätewand integriert ist und eine deformierbare Membran mit einer zentralen Einsenkung (34) aufweist, in die mindestens ein kalibriertes Loch (6) eingelassen ist, wobei die zentrale Einsenkung mit einer Dichtfläche (35) abschließt, um ab einem Druck von mindestens P₁ unter Bildung eines Dichtungssitzes gegen den Verbindungskörper zu pressen.

11. Gerät nach den Ansprüchen 3 und 4, **dadurch gekennzeichnet, dass** das kalibrierte Ausströmmittel (51) in die Rampe (50) des Sicherheitsventils (53) intergriert ist.

12. Gerät nach Anspruch 11, **dadurch gekennzeichnet, dass** das kalibrierte Ausströmmittel einen als elastische Stütze gegen die Rampe (50) des Ventils (53) angebrachten Bimetallstreifen (30) aufweist, wobei die Rampe (50) relativ zu dem kalibrierten Loch ( 6 ) beweglich so angebracht ist, dass die Rampe (50) je nach der Stellung des Bimetallstreifens (30) das kalibrierte Loch (6) öffnet oder schließt.

13. Gerät nach einem der Ansprüche 1 oder 2 **dadurch gekennzeichnet, dass** das kalibrierte Mittel zum Ausströmen der Luft einen Temperatur- oder Druckfühler aufweist, um aufzunehmen, wenn der Druck P₀ oder die Temperatur T₀ erreicht sind, und einen Zeitmesser (60), um die vorbestimmte Zeit Δt ab dem Erreichen von P₀ und T₀ zu messen, sowie ein Öffnungs- und Schließungssystem (61) für das kalibrierte Loch (6).

14. Gerät nach einem der Ansprüche 1 bis 13 **dadurch gekennzeichnet, dass** das kalibrierte Ausströmmittel (3, 6, 10, 30, 51, 60) auf dem Deckel (2) des Kochgeräts angeordnet ist.

15. Verfahren zum Kochen von Nahrungsmitteln unter Dampfdruck in einem geschlossenen Behälter, in welchem
- gewährleistet wird, dass der Druck oder die Temperatur in dem die Nahrungsmittel enthaltenden Behälter ansteigen können,
- ein Schritt zum Entweichen der Luft aus dem Behälter gewährleistet wird, obwohl sich in dem Behälter während eines genügend langen Zeitraums ein Druck aufbauen kann, um ein nahezu vollständiges Entweichen aus dem Behälter zu gewährleisten, oder bis zu einem vorbestimmten Druck oder einer vorbestimmten Temperatur,
- das Entweichen dann gestoppt wird, indem der Behälter vollständig abgedichtet wird und
- mit dem Kochen der Nahrungsmittel unter Druck fortgefahren wird,
**dadurch gekennzeichnet, dass** das Entweichen der Luft durch mindestens eine kalibrierte Öffnung (6) gewährleistet wird, mit welcher sich ein einer Öffnung mit einem Querschnitt zwischen 1,75 mm² und 4,15 mm², vorzugsweise in der Größenordnung von ungefähr 2,80 mm² entsprechendes Ausströmen erzielen lässt.

16. Verfahren nach Anspruch 15, **dadurch gekennzeichnet, dass** ein vollständiges Ausströmen der Luft gewährleistet wird, um die Nahrungsmittel unter vollständiger Dampf-Monophase kochen zu können.

17. Verfahren nach einem der Ansprüche 15 oder 16, **dadurch gekennzeichnet, dass** gewährleistet wird, dass der Schritt zum Entweichen bis zum Erreichen einer mittleren Temperatur für den Behälter von oder mindestens von ungefähr 96°C oder bis zum Erreichen eines mittleren Drucks in der Größenordnung von mindestens 150 mbar erfolgt.

18. Verfahren nach Anspruch 17, **dadurch gekennzeichnet, dass** der Schritt zum Entweichen in einem Bereich zwischen 96°C und 104°C, vorzugsweise zwischen 96°C und 102°C erfolgt.

## Claims

1. Domestic pressure cooking appliance comprising a cooking vessel and a lid (2) intended to be locked on the vessel to allow the rise in pressure in the appliance, the said appliance comprising a bistable calibrated leakage means (3, 6, 10, 30, 51, 60, 80) able to adopt on the one hand an open position in which the continuous pressure rise in the appliance beyond a given pressure P₀ is permitted, whilst allowing a drainage of air from the appliance, or on the other hand a closed position corresponding to an absence of leakage of air to the outside, the said open position being maintained for a predetermined interval of time Δt after P₀ or its corresponding temperature value T₀ is reached, or until predetermined pressure or temperature values prevailing in the appliance are reached, respectively P₁ and T₁, with P₁>P₀ and T₁>T₀, **characterised in that** the calibrated air leakage means comprises at least one calibrated opening (6) allowing a leakage equivalent to an opening with a cross-section of between 1.75 mm² and 4.15 mm² and a closure element mounted so as to be able to move (3, 10, 30, 51, 60), associated with the said at least one calibrated opening (6).

2. Appliance according to Claim 1, **characterised in that** the calibrated opening (6) allows a leakage equivalent to an opening with a cross-section of around approximately 2.80 mm².

3. Appliance according to one of the preceding claims, **characterised in that** the calibrated air leakage means comprises a means (3) reacting to the temperature prevailing in the appliance.

4. Appliance according to Claim 3, **characterised in that** the calibrated air leakage means comprises a bimetallic strip (3), a wax valve or a solenoid valve associated with a temperature sensor.

5. Appliance according to Claim 4, **characterised in that** the calibrated air leakage means comprises a weighted valve (80) supported by a bimetallic strip (3) itself supported by a main body (85) intended to be mounted opposite an opening (5) in the lid (2), so that the calibrated lid (6) is defined between the said valve and the opening (5) forming the sealed reception seat for the valve (80) when the bimetallic strip (3) is in the closed drainage position.

6. Appliance according to Claim 5, **characterised in that** the opening (5) is surmounted by a tubular body (83), the top part (82) of which forms the reception seat for the valve (80), the main body (85) being formed by a removable cowl intended to cover the said tubular body (83).

7. Appliance according to Claim 4, **characterised in that** the calibrated air leakage means comprises a weighted valve (80) supported by a bimetallic strip (3) itself supported by a tubular body (83) intended to be mounted opposite an opening (5) in the lid (2), the said opening (5) forming the sealed reception seat for the valve (80) when the bimetallic strip (3) is in the closed position, the calibrated opening (6) being formed by openings delimited in a perforated collar forming a stop for the tubular body (83) when the drain is open.

8. Appliance according to one of Claims 1 or 2, **characterised in that** the calibrated air leakage means comprises a means (10, 30) reacting to the pressure prevailing in the appliance.

9. Appliance according to Claim 8, **characterised in that** the calibrated leakage means is formed by a seal element (30) which is deformable under the effect of the pressure in order to seal the calibrated hole (6).

10. Appliance according to Claim 9, **characterised in that** the deformable seal (30) is integrated in a drilling in the wall of the appliance, and comprises a deformable membrane with a central well (34) in which there is provided at least one calibrated hole (6), the said central well terminating in a sealing face (35) intended to come to be locked against the body of the seal forming a sealing seat at pressure equal to at least P₁.

11. Appliance according to Claims 3 and 4, **characterised in that** the calibrated leakage means (51) is integrated in the ramp (50) of the safety valve (53).

12. Appliance according to Claim 11, **characterised in that** the calibrated leakage means comprises a bimetallic strip (30) mounted in elastic abutment against the ramp (50) of the valve (53), the ramp (50) being mounted so as to be able to move relative to the calibrated hole (6) so that the ramp (50) comes to open or close the calibrated hole (6) according to the position of the bimetallic strip (30).

13. Appliance according to one of Claims 1 or 2, **characterised in that** the calibrated air leakage means comprises a temperature or pressure sensor for sensing when the pressure P₀ or temperature T₀ is reached, and a timer (60) for counting the predetermined time (Δt) from when P₀ or T₀ is reached, and a system (61) for opening and closing the calibrated hole (6).

14. Appliance according to one of Claims 1 to 13, **characterised in that** the calibrated leakage means (3, 6, 10, 30, 51, 60) is arranged on the lid (2) of the cooking appliance.

15. Method of cooking food under steam pressure in a closed chamber in which:
- there is provided the pressure or temperature rise in the chamber containing the food,
- there is provided an air drainage step in the chamber, whilst allowing the pressure rise in the chamber for sufficient time to ensure the substantially complete drainage of the chamber, or up to a predetermined pressure or temperature,
- then the drainage is stopped, making the chamber completely airtight,
- and the pressure cooking of the food is carried out,
**characterised in that** the air drainage is provided by at least one calibrated opening (6) allowing a leakage equivalent to an opening with a cross section of between 1.75 mm² and 4.15 mm², preferably around approximately 2.80 mm².

16. Method according to Claim 15, **characterised in that** a complete draining of air is provided in order to allow cooking of the food in total steam monophase.

17. Method according to one of Claims 15 or 16, **characterised in that** the drainage step is provided until an average temperature in the chamber of, or at least, approximately 96°C is reached, or until an average pressure of around at least 150 mb is reached.

18. Method according to Claim 17, **characterised in that** the drainage step takes place in a range lying between 96°C and 104°C, preferably between 96°C and 102°C.
